# EUROPEAN PATENT SPECIFICATION

(11) **EP 3 071 806 B1**
(45) Date of publication and mention of the grant of the patent: **26.12.2018**
(21) Application number: 14814994.1
(22) Date of filing: 07.11.2014
(51) Int. Cl.: F01N 3/20, F01N 11/00

(54) **EXHAUST GAS CONTROL APPARATUS AND EXHAUST GAS CONTROL METHOD FOR INTERNAL COMBUSTION ENGINE**
ABGASSTEUERUNGSVORRICHTUNG UND ABGASSTEUERUNGSVERFAHREN FÜR EINEN VERBRENNUNGSMOTOR
APPAREIL DE CONTRÔLE DE GAZ D'ÉCHAPPEMENT ET PROCÉDÉ DE CONTRÔLE DE GAZ D'ÉCHAPPEMENT POUR MOTEUR À COMBUSTION INTERNE

(30) Priority: 19.11.2013 JP 2013238782
(43) Date of publication of application: 28.09.2016
(73) Proprietor: TOYOTA JIDOSHA KABUSHIKI KAISHA, Toyota-shi, Aichi-ken 471-8571 (JP)
(72) Inventor: OTA, Hirohiko, Toyota-shi Aichi-ken 471-8571 (JP); TSUCHIYAMA, Makio, Toyota-shi Aichi-ken 471-8571 (JP)
(74) Representative: Intès, Didier Gérard André
(86) International application number: PCT/IB2014/002376
(87) International publication number: WO 2015/075517

(56) References cited:
- EP-A1- 1 505 271
- EP-A1- 2 284 369
- JP-A- 2007 064 112

## Description

### BACKGROUND OF THE INVENTION

### 1. Field of the Invention

The invention relates to an exhaust gas control apparatus for an internal combustion engine and a control method for an internal combustion engine.

### 2. Description of Related Art

As a method of reducing the amount of NOx which is contained in exhaust gas in an internal combustion engine for a vehicle, a method of purifying exhaust gas with NOx contained therein by using, for example, a catalyst, or the like is known. An internal combustion engine described in, for example, Japanese Patent Application Publication No. 2010-285950 (JP 2010-285950 A) is provided with a selective reduction type NOx purification catalyst, a tank for storing a reducing agent required for the reduction of NOx in the NOx purification catalyst, and an addition valve for adding the reducing agent stored in the tank to an exhaust passage, as an exhaust gas control apparatus for purifying exhaust gas with NOx contained therein. Aqueous urea solution is added from the addition valve to the exhaust passage. Ammonia is generated by hydrolysis of the aqueous urea solution with exhaust heat. The ammonia is adsorbed to the NOx purification catalyst and NOx in the exhaust gas is reduced by using the adsorbed ammonia.

In the apparatus described in JP 2010-285950 A, the leakage of the reducing agent from the addition valve is determined based on a change in remaining amount in the tank when the addition valve is in a closed state. In the apparatus described in JP 2010-285950 A, in order to accurately detect the remaining amount of the reducing agent in the tank, a reducing agent leakage determination is performed with the stopping of an engine as an execution condition.

In JP 2010-285950 A, if the engine is not yet stopped, the leakage determination cannot be performed, and therefore, in a case where one trip (a period from the starting of an internal combustion engine until the stop of the internal combustion engine) is a long period of time, an execution opportunity for leakage determination is reduced.

EP 1 505 271 discloses a reducing agent supply error detecting method for an exhaust gas control catalyst and corresponding detecting apparatus.

JP 2007-064112 discloses a diagnostic device of a reducing agent feeder.

### SUMMARY OF THE INVENTION

The present invention provides an exhaust gas control apparatus and an exhaust gas control method for an internal combustion engine in which it is possible to determine reducing agent leakage from an addition valve during engine operation.

According to the present invention, an exhaust gas control apparatus for an internal combustion engine according to claim 1 is provided.

When the reducing agent leaks from the addition valve which should be in the closed state, the leaked reducing agent vaporizes in the process of passing through the NOx purification catalyst, and therefore, an ambient temperature in the NOx purification catalyst is lowered. For this reason, when the reducing agent leakage from the addition valve has occurred, the temperature of the exhaust gas is lowered in the process of passing through the NOx purification catalyst. Accordingly, if the decrease amount of the exhaust gas temperature is large to some extent, it is possible to determine that the reducing agent leakage from the addition valve has occurred.

According to the above exhaust gas control apparatus, in a state where an engine is operating and the exhaust gas flows through the exhaust passage, when the addition valve is controlled so as to transition to the closing state, it is possible to perform the reducing agent leakage determination. For this reason, it is possible to determine the reducing agent leakage from the addition valve during engine operation. As a situation in which the addition valve is controlled so as to transition to the closing state, (i) a situation in which the NOx purification catalyst is in an inactive state and a NOx reduction effect by reducing agent addition is not sufficiently obtained, (ii) a situation in which, for example, a vehicle with an internal combustion engine mounted thereon is traveling in an urban area or the like, and thus the internal combustion engine easily enters a light load operating state, an idle operating state, or the like and it is difficult for the temperature of the exhaust gas to rise, or the like can be given as an example.

Since the higher the temperature of outside air, the higher the temperature of the NOx purification catalyst also easily becomes, the decrease amount of the above-described exhaust gas temperature is reduced. Since the larger the flow rate of the exhaust gas, the further the amount of heat moving from the exhaust gas to the NOx purification catalyst increases, the temperature of the NOx purification catalyst also easily increases and the decrease amount of the above-described exhaust gas temperature is reduced. In this manner, the decrease amount of the exhaust gas temperature in the process of passing through the NOx purification catalyst changes under the influence of the outside air temperature or the exhaust gas flow rate. Therefore, in the above exhaust gas control apparatus, the determination value may be set according to at least one of the outside air temperature and the exhaust gas flow rate. According to the above configuration, it is possible to suppress occurrence of an erroneous determination relating to the reducing agent leakage. In a case of setting the determination value in this way, the determination value may be set to be small as the outside air temperature is high. Alternatively, the determination value may be set to be small as the exhaust gas flow rate is large.

In a case where the above exhaust gas control apparatus is mounted on a vehicle, the lower the speed of the vehicle is, the further the cooling effect of the exhaust passage due to traveling wind decreases. For this reason, the temperature of the NOx purification catalyst easily becomes high and the decrease amount of the above-described exhaust gas temperature is reduced. In this manner, the decrease amount of the exhaust gas temperature in the process of passing through the NOx purification catalyst changes under the influence of the vehicle speed. Therefore, in the above exhaust gas control apparatus, the determination value may be set according to the speed of a vehicle. According to the above configuration, it is possible to suppress occurrence of an erroneous determination relating to the reducing agent leakage. In a case of setting the determination value in this way, the determination value may be set to be small as the speed of the vehicle is low.

In the exhaust gas control apparatus, in order to purify a component derived from the reducing agent having slipped through the NOx purification catalyst, or a component derived from the reducing agent desorbed from the NOx purification catalyst, an oxidation catalyst is sometimes provided on the side further downstream than the NOx purification catalyst in the exhaust passage. When the component derived from the reducing agent is purified in the oxidation catalyst, oxidation heat is generated in the reaction process, and thus the temperature of the oxidation catalyst becomes high. A rise in the temperature of the oxidation catalyst is transmitted to the NOx purification catalyst too through the exhaust passage or the like, and thus the temperature of the NOx purification catalyst also becomes high. If the temperature of the NOx purification catalyst becomes high due to the heat generation of the oxidation catalyst, the decrease amount of the exhaust gas temperature in the process of passing through the NOx purification catalyst is reduced. For this reason, even though the reducing agent is leaking from the addition valve, an erroneous determination that reducing agent leakage has not occurred may be made.

According to the configuration, it is possible to suppress an erroneous determination of the reducing agent leakage due to the heat generation of the oxidation catalyst.

When the oxidation catalyst is activated refers to, that is, when the heat generation of the oxidation catalyst due to oxidation reaction occurs, and thus a rise in the temperature of the NOx purification catalyst due to the heat generation of the above-described oxidation catalyst occurs. According to the above configuration, it is possible to suppress an erroneous determination of the reducing agent leakage due to the heat generation of the oxidation
catalyst.

According to a second aspect of the present invention, an exhaust gas control method for an internal combustion engine, the internal combustion engine includes an addition valve configured to add a reducing agent to an exhaust passage, and a NOx purification catalyst configured to purify exhaust gas with NOx in exhaust gas contained therein by the added reducing agent, the exhaust gas control method includes: making a transition between opening state and closing state of the addition valve by switching between energization and energization stop of the addition valve; calculating a decrease amount of a temperature of the exhaust gas flowing out from the NOx purification catalyst with respect to a temperature of the exhaust gas before flowing into the NOx purification catalyst, when the addition valve is in the transition to the closing state; and determining that reducing agent leakage from the addition valve is occurred when the decrease amount is greater than or equal to a determination value.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram showing an internal combustion engine to which a first embodiment of an exhaust gas control apparatus for an internal combustion engine is applied and a peripheral configuration thereof;
FIG. 2 is a flowchart showing the procedure of leakage determination processing in the embodiment;
FIG. 3 is a conceptual diagram showing the relationship between an exhaust gas flow rate and an outside air temperature, and a leakage determination value in the embodiment;
FIG. 4 is a flowchart showing the procedure of leakage determination processing in a second embodiment; and
FIG. 5 is a table showing the relationship between a vehicle speed and a leakage determination value in a modified example of the first embodiment.

### DETAILED DESCRIPTION OF EMBODIMENTS

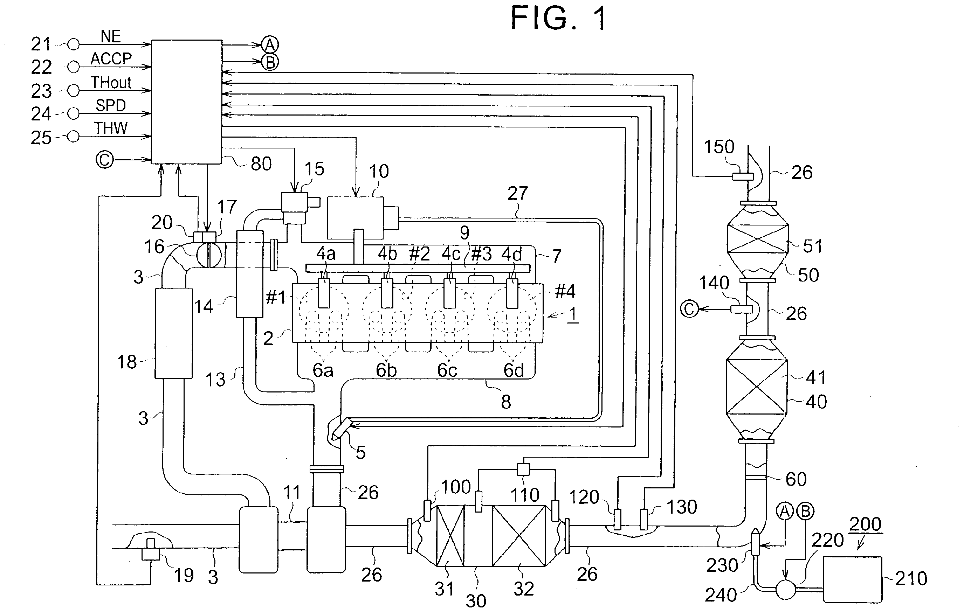

Hereinafter, a first embodiment embodying an exhaust gas control apparatus for an internal combustion engine will be described with reference to FIGS. 1 to 3.

In FIG. 1, a diesel engine (hereinafter referred to simply as an "engine") 1 that is an in-vehicle internal combustion engine with an exhaust gas control apparatus applied thereto, and a peripheral configuration of the engine 1 are shown. In the engine 1, a plurality of cylinders #1 to #4 are provided. In a cylinder head 2, a plurality of fuel injection valves 4a to 4d are mounted corresponding to the respective cylinders #1 to #4. The fuel injection valves 4a to 4d inject fuel into combustion chambers of the respective cylinders #1 to #4. In the cylinder head 2, intake ports for introducing fresh air into the cylinders, and exhaust ports 6a to 6d for discharging combustion gas to the outside of the cylinders are provided corresponding to the respective cylinders #1 to #4.

The fuel injection valves 4a to 4d are connected to a common rail 9 which accumulates high-pressure fuel. The common rail 9 is connected to a supply pump 10. The supply pump 10 sucks in fuel in a fuel tank and also supplies high-pressure fuel to the common rail 9. The high-pressure fuel supplied to the common rail 9 is injected from the respective fuel injection valves 4a to 4d into the respective cylinders at the time of opening of the respective fuel injection valves 4a to 4d.

An intake manifold 7 is connected to the intake ports. The intake manifold 7 is connected to an intake passage 3. In the intake passage 3, an intake throttle valve 16 for adjusting a suction air amount is provided.

An exhaust manifold 8 is connected to the exhaust ports 6a to 6d. The exhaust manifold 8 is connected to an exhaust passage 26. A turbocharger 11 which supercharges suction air which is introduced into the cylinder, by using exhaust gas pressure, is provided in the middle of the exhaust passage 26. An intercooler 18 is provided in the intake passage 3 between a compressor on the intake side of the turbocharger 11 and the intake throttle valve 16. The cooling of the suction air with a temperature increased due to the supercharging of the turbocharger 11 is attained by the intercooler 18.

A first purification member 30 which purifies exhaust gas is provided exhaust-downstream of an exhaust-side turbine of the turbocharger 11 in the middle of the exhaust passage 26. On the inside of the first purification member 30, an oxidation catalyst 31 and a filter 32 are provided in series with respect to a flow direction of the exhaust gas.

A catalyst for oxidation treatment of HC in the exhaust gas is supported in the oxidation catalyst 31. The filter 32 is a member which collects particulate matter (PM) in the exhaust gas and is configured with porous ceramic. A catalyst for accelerating the oxidation of the PM is supported in the filter 32, and the PM in the exhaust gas is collected when passing through a porous wall of the filter 32.

A fuel addition valve 5 for supplying fuel as an additive to the oxidation catalyst 31 or the filter 32 is provided in the vicinity of a gathering portion of the exhaust manifold 8. The fuel addition valve 5 is connected to the supply pump 10 through a fuel supply pipe 27. A disposition position of the fuel addition valve 5 can also be appropriately changed as long as the position is on the upstream side of the first purification member 30 in an exhaust system. Fuel may be supplied as an additive to the oxidation catalyst 31 or the filter 32 by performing post-injection with injection timing of the fuel adjusted.

If the amount of PM collected by the filter 32 exceeds a predetermined value, the regeneration processing of the filter 32 is started, and thus fuel is injected toward the inside of the exhaust manifold 8 from the fuel addition valve 5. The fuel injected from the fuel addition valve 5 is burned if it reaches the oxidation catalyst 31. In this way, a rise in exhaust gas temperature is attained. The exhaust gas having risen in temperature in the oxidation catalyst 31 flows into the filter 32, whereby the filter 32 rises in temperature. In this way, the PM accumulated on the filter 32 is subjected to oxidation treatment, and thus the regeneration of the filter 32 is attained.

A second purification member 40 which purifies the exhaust gas is provided exhaust-downstream of the first purification member 30 in the middle of the exhaust passage 26. On the inside of the second purification member 40, a selective reduction type NOx catalyst (hereinafter referred to as an SCR catalyst) 41 as a NOx purification catalyst which reduces and purifies NOx in the exhaust gas by using a reducing agent is disposed.

A third purification member 50 which purifies the exhaust gas is provided exhaust-downstream of the second purification member 40 in the middle of the exhaust passage 26. On the inside of the third purification member 50, an ammonia oxidation catalyst 51 which oxidizes ammonia in the exhaust gas is disposed. Ammonia having slipped through the SCR catalyst 41 or ammonia which has been desorbed from the SCR catalyst 41, but has not been used for the reduction of NOx is oxidized by the ammonia oxidation catalyst 51.

In the engine 1, an aqueous urea solution supply mechanism 200 as a reducing agent supply mechanism which adds a reducing agent to the SCR catalyst 41 is provided. The aqueous urea solution supply mechanism 200 is configured to include a tank 210, a urea addition valve 230, a supply passage 240, and a pump 220. The tank 210 stores an aqueous urea solution as a reducing agent therein. The urea addition valve 230 injects and supplies the aqueous urea solution into the exhaust passage 26. The supply passage 240 connects the urea addition valve 230 and the tank 210. The pump 220 is provided in the middle of the supply passage 240.

The urea addition valve 230 is provided in the exhaust passage 26 between the first purification member 30 and the second purification member 40. An injection hole of the urea addition valve 230 is opened toward the SCR catalyst 41. The urea addition valve 230 is controlled such that a transition between opening and closing states is made by switching between energization and energization stop. Specifically, if switching from an energization stop state to an energization state is made, the urea addition valve 230 transitions to the opening state. In contrast, if switching from the energization state to the energization stop state is made, the urea addition valve 230 transitions to the closing state. If the urea addition valve 230 is opened, the aqueous urea solution is injected and supplied into the exhaust passage 26 through the supply passage 240.

The pump 220 is an electric pump. The pump 220 feeds the aqueous urea solution toward the urea addition valve 230 from the tank 210 at the time of forward rotation. In contrast, the pump 220 feeds the aqueous urea solution toward the tank 210 from the urea addition valve 230 at the time of reverse rotation. That is, at the time of the reverse rotation of the pump 220, the aqueous urea solution is recovered from the urea addition valve 230 and the supply passage 240 and returned to the tank 210.

In the exhaust passage 26 between the urea addition valve 230 and the SCR catalyst 41, a dispersion plate 60 is provided which promotes the atomization of the aqueous urea solution by dispersing the aqueous urea solution injected from the urea addition valve 230.

The aqueous urea solution injected from the urea addition valve 230 is hydrolyzed by the heat of the exhaust gas, thereby becoming ammonia. The ammonia is adsorbed to the SCR catalyst 41 and NOx is reduced by the adsorbed ammonia,

In addition, in the engine 1, an exhaust gas recirculation device (hereinafter referred to as an EGR device) is provided. Exhaust gas recirculation processing (hereinafter referred to as EGR processing) of introducing some of the exhaust gas to the suction air is performed by the EGR device, whereby a combustion temperature in the cylinder is lowered, and thus the amount of generation of NOx is reduced. The EGR device is configured to include an EGR passage 13, an EGR valve 15, an EGR cooler 14, and the like. The EGR passage 13 makes the intake passage 3 and the exhaust manifold 8 communicate with each other. The EGR valve 15 is provided in the EGR passage 13. An opening degree of the EGR valve 15 is adjusted, whereby an exhaust gas recirculation amount, a so-called EGR amount, which is introduced from the exhaust passage 26 to the intake passage 3, is adjusted. The temperature of the exhaust gas flowing through the EGR passage 13 is reduced by the EGR cooler 14.

In the engine 1, various sensors for detecting an engine operating state are mounted. As various sensors, there are, for example, an air flow meter 19, a throttle valve opening degree sensor 20, an engine speed sensor 21, an accelerator sensor 22, an outside air temperature sensor 23, a vehicle speed sensor 24, a water temperature sensor 25, a first exhaust gas temperature sensor 100, a differential pressure sensor 110, a second exhaust gas temperature sensor 120, a first NOx sensor 130, a third exhaust gas temperature sensor 140, and a second NOx sensor 150. The air flow meter 19 detects a suction air amount GA. The throttle valve opening degree sensor 20 detects an opening degree of the intake throttle valve 16. The engine speed sensor 21 detects a rotational speed of a crankshaft, that is, an engine speed NE. The accelerator sensor 22 detects the amount of depression of an accelerator pedal, that is, an accelerator operation amount ACCP. The outside air temperature sensor 23 detects an outside air temperature THout. The vehicle speed sensor 24 detects a vehicle speed SPD of a vehicle with the engine 1 mounted thereon. The water temperature sensor 25 detects a cooling water temperature THW of the engine 1.

The first exhaust gas temperature sensor 100 provided upstream of the oxidation catalyst 31 detects a first exhaust gas temperature TH1 that is the temperature of the exhaust gas before flowing into the oxidation catalyst 31. The differential pressure sensor 110 detects a pressure difference ΔP between exhaust gas pressures upstream and downstream of the filter 32.

The second exhaust gas temperature sensor 120 and the first NOx sensor 130 are provided upstream of the urea addition valve 230 in the exhaust passage 26 between the first purification member 30 and the second purification member 40. The second exhaust gas temperature sensor 120 detects a second exhaust gas temperature TH2 that is the temperature of the exhaust gas before flowing into the SCR catalyst 41. The first NOx sensor 130 detects the amount of NOx which is contained in the exhaust gas before flowing into the SCR catalyst 41, more specifically, a first NOx concentration N1 that is the concentration (unit: ppm) of NOx.

The third exhaust gas temperature sensor 140 is provided in the exhaust passage 26 between the second purification member 40 and the third purification member 50. The third exhaust gas temperature sensor 140 detects a third exhaust gas temperature TH3 that is the temperature of the exhaust gas after passing through the SCR catalyst 41.

The second NOx sensor 150 which detects a second NOx concentration N2 that is the NOx concentration of the exhaust gas purified in the SCR catalyst 41 is provided in the exhaust passage 26 further downstream than the third purification member 50.

The outputs of these various sensors and the like are input to an electronic control unit 80 configuring a control section. The electronic control unit 80 is configured with a focus on a microcomputer provided with a central processing electronic control unit (CPU), a read-only memory (ROM) in which various programs, a map, or the like is stored in advance, a random access memory (RAM) in which the calculation results of the CPU, or the like is temporarily stored, a timer counter, an input interface, an output interface, and the like.

The electronic control unit 80 is configured so as to perform various controls of the engine 1, such as the fuel injection control of the fuel injection valves 4a to 4d or the fuel addition valve 5, the discharge pressure control of the supply pump 10, and the driving amount control of an actuator 17 which opens and closes the intake throttle valve 16, for example.

Various exhaust gas purification controls such as the above-described regeneration processing of burning PM collected by the filter 32 are also performed by the electronic control unit 80. The electronic control unit 80 performs the addition control of the aqueous urea solution by the urea addition valve 230 as one of the exhaust gas purification controls.

In the addition control, the electronic control unit 80 calculates the amount of urea required for the reduction treatment of NOx which is discharged from the engine 1, based on an engine operating state or the like. Further, in the addition control, the electronic control unit 80 calculates the amount of urea required to maintain the amount of ammonia adsorbed to the SCR catalyst 41 at a predetermined amount.

Then, the electronic control unit 80 calculates the sum of the amount of urea required to reduce NOx and the amount of urea required to maintain an ammonia adsorption amount, as a urea addition amount, and controls a drive state of the urea addition valve 230 such that the aqueous urea solution in an amount equivalent to the urea addition amount is injected from the urea addition valve 230.

In a situation in which the SCR catalyst 41 is in an inactive state and a NOx reduction effect by aqueous urea solution addition is not sufficiently obtained, the electronic control unit 80 stops the energization of the urea addition valve 230, thereby interrupting the aqueous urea solution addition. As an example in which the SCR catalyst 41 enters an inactive state, a situation in which a vehicle with the engine 1 mounted thereon is traveling in an urban area or the like, and thus the engine 1 easily enters a light load operating state, an idle operating state, or the like and it is difficult for the temperature of the exhaust gas to rise, or the like can be given as an example. Whether or not the SCR catalyst 41 is in an inactive state can be determined based on the exhaust gas temperature such as the second exhaust gas temperature TH2.

If the injection hole of the urea addition valve 230 is not completely closed when the urea addition valve 230 is controlled so as to transition to the closing state, that is, during a period in which the energization of the urea addition valve 230 is stopped, the aqueous urea solution leaks from the urea addition valve 230 which should be originally in the closed state. Such aqueous urea solution leakage from the urea addition valve 230 can be detected based on, for example, a change in the remaining amount of the reducing agent in the tank as described above, or the like. However, in this case, an opportunity to determinate the aqueous urea solution leakage is limited to when it is possible to detect the remaining amount of the reducing agent in the tank as accurately as possible, such as when the engine is being stopped, and thus an opportunity to determine the aqueous urea solution leakage is reduced. In particular, in a case where one trip is a long period of time, an opportunity to determine the aqueous urea solution leakage is further reduced.

It is also conceivable to determine the abnormality of the urea addition valve 230 by using a change in NOx reduction rate, or the like. However, even when purification abnormality occurs in the SCR catalyst, the NOx reduction rate changes. For this reason, there is a possibility that it may be difficult to specify the abnormality of the urea addition valve 230 by using a change in NOx reduction rate, or the like.

When the aqueous urea solution leaks from the urea addition valve 230 which should be in the closed state, the leaked aqueous urea solution vaporizes in the process of passing through the SCR catalyst 41. For this reason, an ambient temperature in the SCR catalyst 41 is lowered. Therefore, when the aqueous urea solution leakage from the urea addition valve 230 occurs, the temperature of the exhaust gas is lowered in the process of passing through the SCR catalyst 41. Accordingly, if the decrease amount of the exhaust gas temperature is large to some extent, it is possible to determine that the aqueous urea solution leakage from the urea addition valve 230 has occurred.

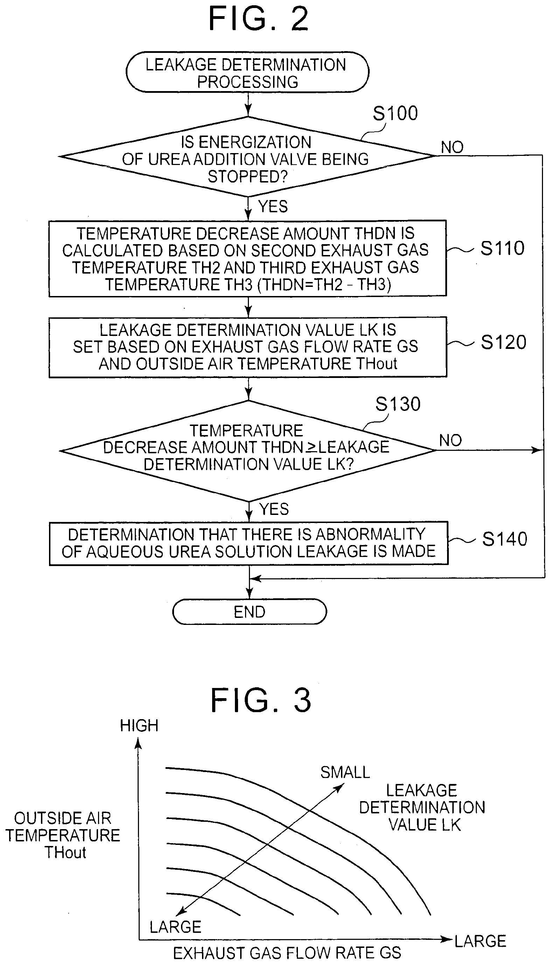

In this embodiment, the aqueous urea solution leakage is determined based on the decrease amount of the exhaust gas temperature. In FIG. 2, the procedure of aqueous urea solution leakage determination processing is shown. This processing is executed for each predetermined period by the electronic control unit 80. The electronic control unit 80 executing the leakage determination processing configures a leakage determination section.

When this processing is started, the electronic control unit 80 determines whether or not the energization of the urea addition valve 230 is being stopped (S100). As described above, when the SCR catalyst 41 is in an inactive state, or the like, the energization of the urea addition valve 230 is stopped.

When the energization of the urea addition valve 230 is not yet stopped (S100: NO), that is, when the energization of the urea addition valve 230 is being performed and the urea addition valve 230 is controlled so as to transition to the opening state, the aqueous urea solution leakage determination cannot be performed, and therefore, the electronic control unit 80 temporarily ends this processing.

In contrast, when the energization of the urea addition valve 230 is being stopped (S100: YES), that is, when the urea addition valve 230 is controlled so as to transition to the closing state, the electronic control unit 80 calculates a temperature decrease amount THDN equivalent to the above-described decrease amount of the exhaust gas temperature based on the second exhaust gas temperature TH2 and the third exhaust gas temperature TH3 (S110). In this Step S110, a value obtained by subtracting the third exhaust gas temperature TH3 from the second exhaust gas temperature TH2 is calculated as the temperature decrease amount THDN. That is, the temperature of the exhaust gas before flowing into the SCR catalyst 41 (=the second exhaust gas temperature TH2) is set as a criterion and the temperature decrease amount THDN is calculated as a value indicating how much the temperature of the exhaust gas flowing out from the SCR catalyst 41 (=the third exhaust gas temperature TH3) is lowered from the criterion. When the third exhaust gas temperature TH3 is higher than the second exhaust gas temperature TH2, the temperature decrease amount THDN becomes a negative value. However, in a case where the temperature decrease amount THDN becomes a negative value, the electronic control unit 80 temporarily ends this processing.

Next, the electronic control unit 80 sets a leakage determination value LK based on the outside air temperature THout and the exhaust gas flow rate GS (S120). The exhaust gas flow rate GS is separately calculated based on the suction air amount GA and the amount of fuel which is injected from the fuel injection valves 4a to 4d. Simply, it is also possible to calculate the exhaust gas flow rate GS by only the suction air amount GA. The actual exhaust gas flow rate GS may be measured by a sensor or the like.

The leakage determination value LK is a value for determining whether or not the aqueous urea solution leakage from the urea addition valve 230 has occurred, and in a case where the temperature decrease amount THDN is greater than or equal to the leakage determination value LK, the electronic control unit 80 determines that the aqueous urea solution leakage has occurred.

As shown in FIG. 3, the leakage determination value LK is set to a value which is smaller as the outside air temperature THout is higher. The leakage determination value LK is set to a value which is smaller as the exhaust gas flow rate GS is larger.

If the leakage determination value LK is set in this way, the electronic control unit 80 determines whether or not the temperature decrease amount THDN is greater than or equal to the leakage determination value LK (S130). When the temperature decrease amount THDN is less than the leakage determination value LK (S130: NO), the electronic control unit 80 temporarily ends this processing.

In contrast, when the temperature decrease amount THDN is greater than or equal to the leakage determination value LK (S130: YES), the electronic control unit 80 determines that abnormality of the aqueous urea solution leakage is present in the urea addition valve 230 (S140) and temporarily ends this processing.

Next, an action by the leakage determination processing will be described. During a period in which the energization of the urea addition valve 230 is being stopped (S100: YES) and during a period in which the urea addition valve 230 should be in the closed state, when the temperature of the exhaust gas flowing out from the SCR catalyst 41 is lowered by greater than or equal to the leakage determination value LK with respect to the temperature of the exhaust gas before flowing into the SCR catalyst 41 (S130), a determination that the aqueous urea solution leakage has occurred is made (S140). According to such a leakage determination, when the engine is operating, the exhaust gas flows through the exhaust passage 26 and the energization of the urea addition valve 230 is being stopped, it is possible to perform the aqueous urea solution leakage determination. That is, when the engine is operating, the exhaust gas flows through the exhaust passage 26 and the addition valve is controlled so as to transition to the closing state, it is possible to perform the aqueous urea solution leakage determination. For this reason, it is possible to determine the aqueous urea solution leakage from the urea addition valve 230 during engine operation, and thus an opportunity to determinate the aqueous urea solution leakage increases, compared to an apparatus which uses the condition that an engine is being stopped, as a condition to perform an aqueous urea solution leakage determination.

The amount of vaporization of the aqueous urea solution in the above-described SCR catalyst 41 basically depends on the temperature of the SCR catalyst 41 and is hardly affected by the purification abnormality of the SCR catalyst 41. Accordingly, compared to a case of performing the abnormality determination of the urea addition valve 230 by using a change in NOx reduction rate, or the like, it is possible to more reliably determine the aqueous urea solution leakage of the urea addition valve 230.

Since the higher the outside air temperature THout is, the higher the temperature of the SCR catalyst 41 also easily becomes, the above-described temperature decrease amount THDN is reduced. Since the larger the exhaust gas flow rate GS is, the further the amount of heat moving from the exhaust gas to the SCR catalyst 41 increases, the temperature of the SCR catalyst 41 also easily increases and the above-described temperature decrease amount THDN is reduced. In this manner, the temperature decrease amount THDN indicating the decrease amount of the exhaust gas temperature in the process of passing through the SCR catalyst 41 changes under the influence of the outside air temperature THout or the exhaust gas flow rate GS.

Therefore, in this embodiment, the leakage determination value LK is changed according to the outside air temperature THout and the exhaust gas flow rate GS (S120). More specifically, as described above, since the higher the outside air temperature THout is, the smaller the temperature decrease amount THDN becomes, the leakage determination value LK is set to be small as the outside air temperature THout is high, in accordance with a reduction in the temperature decrease amount THDN. As described above, since the larger the exhaust gas flow rate GS is, the smaller the temperature decrease amount THDN becomes, the leakage determination value LK is set to be small as the exhaust gas flow rate GS is large, in accordance with a reduction in the temperature decrease amount THDN. Due to such variable setting of the leakage determination value LK, occurrence of an erroneous determination relating to the aqueous urea solution leakage is suppressed.

As described above, according to this embodiment, the following effects can be obtained. When the temperature of the exhaust gas flowing out from the SCR catalyst 41 (the third exhaust gas temperature TH3) is lowered by greater than or equal to the leakage determination value LK with respect to the temperature of the exhaust gas before flowing into the SCR catalyst 41 (the second exhaust gas temperature TH2) (the temperature decrease amount THDN≥the leakage determination value LK) when the urea addition valve 230 is controlled so as to transition to the closing state (during the energization stop period of the urea addition valve 230), a determination that the aqueous urea solution leakage has occurred is made. For this reason, it is possible to determine the aqueous urea solution leakage from the urea addition valve 230 during engine operation, and thus it also becomes possible to increase an opportunity to determine the aqueous urea solution leakage.

Since the leakage determination value LK is changed according to the outside air temperature THout and the exhaust gas flow rate GS, it is possible to suppress occurrence of an erroneous determination relating to the aqueous urea solution leakage.

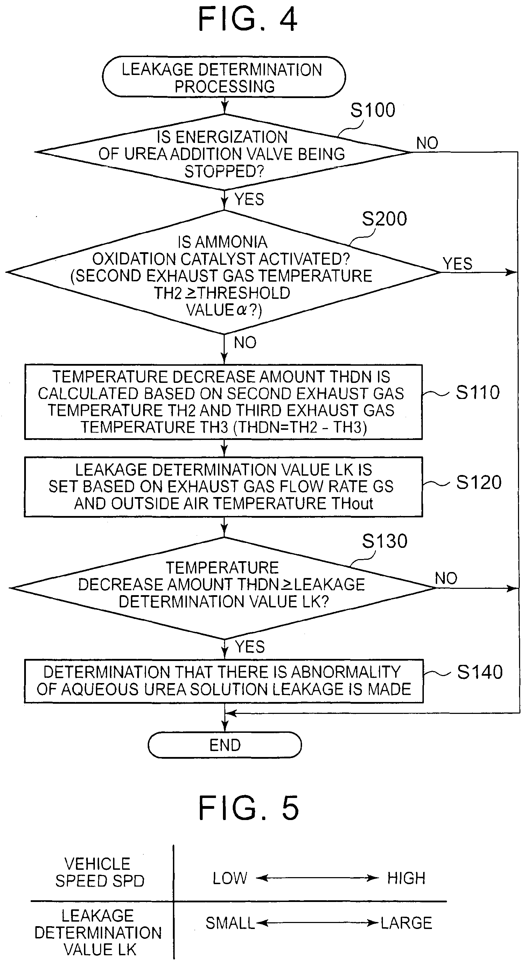

Next, a second embodiment of the exhaust gas control apparatus for an internal combustion engine will be described with reference to FIG. 4.

In this embodiment, when the ammonia oxidation catalyst 51 provided on the side further downstream than the SCR catalyst 41 in the exhaust passage 26 is not activated, the above-described aqueous urea solution leakage determination is performed, and when the ammonia oxidation catalyst 51 is activated, the above-described aqueous urea solution leakage determination is prohibited. This embodiment is different only in this respect from the first embodiment. Therefore, in the following, the leakage determination processing of this embodiment will be described focusing on such a difference.

As shown in FIG. 4, if the leakage determination processing of this embodiment is started, the electronic control unit 80 determines whether or not the energization of the urea addition valve 230 is being stopped (S100). As described above, in a case where the SCR catalyst 41 is in an inactive state, or the like, the energization of the urea addition valve 230 is stopped.

Then, when the energization of the urea addition valve 230 is not yet stopped (S100: NO), that is, when the energization of the urea addition valve 230 is being performed and the urea addition valve 230 is controlled so as to transition to the opening state, since the aqueous urea solution leakage determination cannot be performed, it is not possible to perform the aqueous urea solution leakage determination, and therefore, the electronic control unit 80 temporarily ends this processing.

In contrast, when the energization of the urea addition valve 230 is being stopped (S100: YES), that is, when the urea addition valve 230 is controlled so as to transition to the closing state, the electronic control unit 80 determines whether or not the ammonia oxidation catalyst 51 is activated (S200). In Step S200, the lowest temperature of the second exhaust gas temperature TH2 capable of maintaining an activation state of the ammonia oxidation catalyst 51 is set as a threshold value α. In Step S200, when the second exhaust gas temperature TH2 is greater than or equal to the threshold value a, the electronic control unit 80 determines that the ammonia oxidation catalyst 51 is activated.

Such activation determination of the ammonia oxidation catalyst 51 can be performed in an appropriate aspect. For example, a bed temperature of the ammonia oxidation catalyst 51 is estimated based on the second exhaust gas temperature TH2, the third exhaust gas temperature TH3, or the like, and when the estimated bed temperature is greater than or equal to a lowest activation temperature β of the ammonia oxidation catalyst 51, a determination that the ammonia oxidation catalyst 51 is activated may be made. A temperature sensor detecting the bed temperature of the ammonia oxidation catalyst 51 is provided, and when the detection value of the temperature sensor is greater than or equal to the lowest activation temperature β, a determination that the ammonia oxidation catalyst 51 is activated may be made. The lowest temperature of the third exhaust gas temperature TH3 capable of maintaining the activation state of the ammonia oxidation catalyst 51 is set as a threshold value γ, and when the third exhaust gas temperature TH3 is greater than or equal to the threshold value γ, a determination that the ammonia oxidation catalyst 51 is activated may be made.

When a determination that the ammonia oxidation catalyst 51 is activated is made in Step S200 (S200: YES), the electronic control unit 80 temporarily ends this processing. That is, in the leakage determination processing of the first embodiment, in a case where an affirmative determination is made in Step S100, the processing of the above-described Step S110 or later is sequentially executed, thereby proceeding with the aqueous urea solution leakage determination. In contrast, in this embodiment, even in a case where an affirmative determination is made in Step S100, when the ammonia oxidation catalyst 51 is activated, the processing of Step S110 or later is prohibited, thereby prohibiting the aqueous urea solution leakage determination.

When a determination that the ammonia oxidation catalyst 51 is not activated is made in the above Step S200 (S200: NO), the electronic control unit 80 sequentially executes the processing of the above-described Step S110 or later, thereby performing the aqueous urea solution leakage determination.

Next, an action by the leakage determination processing of this embodiment will be described. When ammonia is oxidized in the ammonia oxidation catalyst 51, oxidation heat is generated in the reaction process, and thus the temperature of the ammonia oxidation catalyst 51 becomes high. A rise in the temperature of the ammonia oxidation catalyst 51 is thermally conducted to the SCR catalyst 41 too through the exhaust passage 26, and thus the temperature of the SCR catalyst 41 also becomes high. If the temperature of the SCR catalyst 41 becomes high due to the heat generation of the ammonia oxidation catalyst 51, the temperature decrease amount THDN indicating the decrease amount of the exhaust gas temperature in the process of passing through the SCR catalyst 41 is reduced, and therefore, even though the aqueous urea solution is leaking from the urea addition valve 230, there is a concern that an erroneous determination that aqueous urea solution leakage is not occurred may be made.

In this respect, in the leakage determination processing of this embodiment, when the ammonia oxidation catalyst 51 is not activated (S200: NO), that is, when the heat generation of the ammonia oxidation catalyst 51 due to oxidation reaction does not occur and a rise in the temperature of the SCR catalyst 41 due to the heat generation of the ammonia oxidation catalyst 51 described above does not occur, the processing of Step S110 or later is performed, thereby performing the aqueous urea solution leakage determination. For this reason, an erroneous determination of the aqueous urea solution leakage due to the heat generation of the ammonia oxidation catalyst 51 is suppressed.

When the ammonia oxidation catalyst 51 is activated (S200: YES), that is, when the heat generation of the ammonia oxidation catalyst 51 due to oxidation reaction occurs and a rise in the temperature of SCR catalyst 41 due to the heat generation of the ammonia oxidation catalyst 51 occurs, the aqueous urea solution leakage determination based on the temperature decrease amount THDN is prohibited. For this reason, also by this, an erroneous determination of the aqueous urea solution leakage due to the heat generation of the ammonia oxidation catalyst 51 is suppressed.

According to this embodiment described above, in addition to the effects described in the first embodiment, the following effects can be further obtained. Since the aqueous urea solution leakage determination is performed when the ammonia oxidation catalyst 51 is not activated, it is possible to suppress an erroneous determination of the aqueous urea solution leakage due to the heat generation of the ammonia oxidation catalyst 51.

When the ammonia oxidation catalyst 51 is activated, the aqueous urea solution leakage determination is prohibited, and therefore, also by this, it is possible to suppress an erroneous determination of the aqueous urea solution leakage due to the heat generation of the ammonia oxidation catalyst 51.

Each embodiment described above can also be modified and implemented as follows. In the first embodiment, the leakage determination value LK is changed according to the outside air temperature THout and the exhaust gas flow rate GS. In addition, the leakage determination value LK may be changed according to only the outside air temperature THout, the leakage determination value LK may be changed according to only the exhaust gas flow rate GS, or the leakage determination value LK may be changed according to the outside air temperature THout, the exhaust gas flow rate GS, and another parameter different from each of these parameters, the outside air temperature THout and the exhaust gas flow rate GS.

The lower the speed of a vehicle is, the further the cooling effect of the exhaust passage 26 due to traveling wind decreases. For this reason, the lower the speed of a vehicle is, the higher the temperature of the SCR catalyst 41 easily becomes, and the above-described temperature decrease amount THDN is reduced. In this manner, the decrease amount of the exhaust gas temperature in the process of passing through the SCR catalyst 41 changes under the influence of a vehicle speed. Therefore, by changing the above-described leakage determination value LK according to the speed of a vehicle, it is possible to suppress occurrence of an erroneous determination relating to the aqueous urea solution leakage.

As shown in FIG. 5, in a case of changing the leakage determination value LK in this way, it is preferable to variably set the leakage determination value LK based on the vehicle speed SPD such that the lower the vehicle speed SPD that is the speed of a vehicle is, the smaller the leakage determination value LK becomes. At the time of a change of the leakage determination value LK according to the outside air temperature THout and the exhaust gas flow rate GS described in the first embodiment, a change of the leakage determination value LK according to the vehicle speed SPD may be combined therewith. Instead of a change of the leakage determination value LK according to the outside air temperature THout and the exhaust gas flow rate GS, a change of the leakage determination value LK according to the vehicle speed SPD may be performed. A change of the leakage determination value LK according to the outside air temperature THout and the vehicle speed SPD, or a change of the leakage determination value LK according to the exhaust gas flow rate GS and the vehicle speed SPD may be performed.

In the second embodiment, the electronic control unit 80 is made so as to perform the processing of Step S200 after the processing of Step S100 is performed. However, the order of execution of Step S200 in the leakage determination processing may be appropriately changed as long as it is a step prior to Step S140 shown in previous FIG. 1 or FIG. 4. For example, the electronic control unit 80 may perform the processing of Step S100 or later after the processing of Step S200 is performed, or may perform the processing of Step S200 after the processing of Step S130 is performed.

The urea addition valve 230 is a so-called normally-closed type valve which is opened at the time of energization and closed at the time of energization stop. In addition, a so-called normally-opened type valve which is closed at the time of energization and opened at the time of energization stop is also acceptable. In this case, the electronic control unit 80 determines whether or not the energization of the urea addition valve 230 is being performed in the above-described Step S100 shown in FIG. 2 or 4, thereby determining whether or not the urea addition valve 230 is controlled so as to transition to the closing state. Then, in a case where a determination that the energization of the urea addition valve 230 is being performed and the urea addition valve 230 is controlled so as to transition to the closing state is made, the electronic control unit 80 may execute the processing of Step S110 or later shown in FIG. 2, or the processing of Step S200 or later shown in FIG. 4.

The aqueous urea solution is used as the reducing agent. However, other reducing agents, for example, an aqueous ammonia solution or the like, may be used.

## Claims

1. An exhaust gas control apparatus for the internal combustion engine, comprising:
an addition valve (230) configured to add a reducing agent to an exhaust passage (26);
a NOx purification catalyst (41) configured to reduce NOx in exhaust gas by the added reducing agent;
an oxidation catalyst provided downstream of the NOx purification catalyst in the exhaust passage (26), **characterized by** comprising:
an electronic control unit (80) configured to
execute a control in which a transition between opening state and closing state of the addition valve (230) is made by switching between energization and energization stop of the addition valve (230),
calculate a decrease amount of a temperature of the exhaust gas flowing out from the NOx purification catalyst (41) with respect to a temperature of the exhaust gas before flowing into the NOx purification catalyst (41), when the addition valve (230) is in the transition to the closing state, and
determine that reducing agent leakage from the addition valve (230) has occurred when the decrease amount is greater than or equal to a determination value,
wherein the electronic control unit (80) is configured to prohibit a determination of the reducing agent leakage from the addition valve (230) when the oxidation catalyst is activated.

2. The exhaust gas control apparatus for the internal combustion engine according to claim 1, wherein the determination value is set according to at least one of an outside air temperature and an exhaust gas flow rate.

3. The exhaust gas control apparatus for the internal combustion engine according to claim 1 or 2, wherein the exhaust gas control apparatus is mounted on a vehicle, and the determination is set according to a speed of the vehicle.

4. An exhaust gas control method for an internal combustion engine (1), the internal combustion engine (1) including an addition valve (230) configured to add a reducing agent to an exhaust passage (26), and a NOx purification catalyst (41) configured to purify exhaust gas with NOx in exhaust gas contained therein by the added reducing agent, the exhaust gas control method **characterized by** comprising:
making a transition between opening state and closing state of the addition valve (230) by switching between energization and energization stop of the addition valve (230);
calculating a decrease amount of a temperature of the exhaust gas flowing out from the NOx purification catalyst (41) with respect to a temperature of the exhaust gas before flowing into the NOx purification catalyst (41), when the addition valve (230) is in the transition to the closing state;
determining that reducing agent leakage from the addition valve (230) has occurred when the decrease amount is greater than or equal to a determination value; and
prohibiting a determination of the reducing agent leakage from the addition valve (230) when the oxidation catalyst is activated.

## Patentansprüche

1. Abgas-Steuervorrichtung für einen Verbrennungsmotor, umfassend:
ein Zugabeventil (230), das konfiguriert ist, um ein Reduktionsmittel zu einem Abgasdurchgang (26) hinzuzufügen,
einen NOx-Reinigungskatalysator (41), der konfiguriert ist, um NOx in Abgas durch das hinzugefügte Reduktionsmittel zu reduzieren,
einen Oxidationskatalysator, der stromabwärts von dem NOx-Reinigungskatalysator in dem Abgasdurchgang (26) bereitgestellt ist,
**dadurch gekennzeichnet, dass** sie umfasst:
eine elektronische Steuereinheit (80), die konfiguriert ist, um
eine Steuerung auszuführen, bei der ein Übergang zwischen einem Öffnungszustand und einem Schließzustand des Zugabeventils (230) durch Umschalten zwischen Energiezufuhr und Energiezufuhrstopp des Zugabeventils (230) durchgeführt wird,
einen Verminderungsbetrag einer Temperatur des Abgases zu berechnen, das aus dem NOx-Reinigungskatalysator (41) strömt, in Bezug auf eine Temperatur des Abgases, bevor es in den NOx-Reinigungskatalysator (41) strömt, wenn das Zugabeventil (230) im Übergang zu dem Schließzustand ist, und
zu bestimmen, dass ein Reduktionsmittelaustreten aus dem Zugabeventil (230) aufgetreten ist, wenn der Abnahmebetrag größer oder gleich einem Bestimmungswert ist,
wobei die elektronische Steuereinheit (80) konfiguriert ist, um eine Bestimmung des Reduktionsmittelaustretens aus dem Zugabeventil (230) zu verhindern, wenn der Oxidationskatalysator aktiviert ist.

2. Abgas-Steuervorrichtung für den Verbrennungsmotor nach Anspruch 1, wobei der Bestimmungswert gemäß mindestens einer von einer Außenlufttemperatur und einer Abgasströmungsrate festgelegt ist.

3. Abgas-Steuervorrichtung für den Verbrennungsmotor nach Anspruch 1 oder 2, wobei die Abgas-Steuervorrichtung an einem Fahrzeug montiert ist und die Bestimmung gemäß einer Geschwindigkeit des Fahrzeugs festgelegt wird.

4. Abgas-Steuerverfahren für einen Verbrennungsmotor (1), wobei der Verbrennungsmotor (1) ein Zugabeventil (230), das konfiguriert ist, um ein Reduktionsmittel zu einem Abgasdurchgang (26) hinzuzufügen, und einen NOx-Reinigungskatalysator (41), der konfiguriert ist, um Abgas mit NOx in Abgas, das darin enthalten ist, durch das hinzugefügte Reduktionsmittel zu reinigen, aufweist, wobei das Abgas-Steuerverfahren **dadurch gekennzeichnet ist, dass** es umfasst:
Durchführen eines Übergangs zwischen einem Öffnungszustand und einem Schließzustand des Zugabeventils (230) durch Umschalten zwischen Energiezufuhr und Energiezufuhrstopp des Zugabeventils (230),
Berechnen eines Verminderungsbetrags einer Temperatur des Abgases, das aus dem NOx-Reinigungskatalysator (41) strömt, in Bezug auf eine Temperatur des Abgases, bevor es in den NOx-Reinigungskatalysator (41) strömt, wenn das Zugabeventil (230) im Übergang zu dem Schließzustand ist,
Bestimmen, dass ein Reduktionsmittelaustreten aus dem Zugabeventil (230) aufgetreten ist, wenn der Abnahmebetrag größer oder gleich einem Bestimmungswert ist, und
Verhindern einer Bestimmung des Reduktionsmittelaustretens aus dem Zugabeventil (230), wenn der Oxidationskatalysator aktiviert ist.

## Revendications

1. Appareil de commande de gaz d'échappement pour le moteur à combustion interne, comportant :
une soupape d'addition (230) configurée pour ajouter un agent de réduction à un passage d'échappement (26) ;
un catalyseur de purification de NOx (41) configuré pour réduire du NOx dans du gaz d'échappement grâce à l'agent de réduction ajouté ;
un catalyseur d'oxydation prévu en aval du catalyseur de purification de NOx dans le passage d'échappement (26), **caractérisé en ce qu'**il comporte :
une unité de commande électronique (80) configurée pour
exécuter une commande dans laquelle une transition entre un état d'ouverture et un état de fermeture de la soupape d'addition (230) est faite par commutation entre une excitation et un arrêt d'excitation de la soupape d'addition (230),
calculer une quantité de diminution d'une température du gaz d'échappement s'écoulant hors du catalyseur de purification de NOx (41) par rapport à une température du gaz d'échappement avant de s'écouler dans le catalyseur de purification de NOx (41), quand la soupape d'addition (230) est dans la transition vers l'état de fermeture, et
déterminer qu'une fuite d'agent de réduction de la soupape d'addition (230) s'est produite quand la quantité de diminution est supérieure ou égale à une valeur de détermination,
dans lequel l'unité de commande électronique (80) est configurée pour interdire une détermination de la fuite d'agent de réduction de la soupape d'addition (230) quand le catalyseur d'oxydation est activé.

2. Appareil de commande de gaz d'échappement pour le moteur à combustion interne selon la revendication 1, dans lequel la valeur de détermination est établie en fonction d'au moins un d'une température d'air extérieur et d'un débit de gaz d'échappement.

3. Appareil de commande de gaz d'échappement pour le moteur à combustion interne selon la revendication 1 ou 2, dans lequel l'appareil de commande de gaz d'échappement est monté sur un véhicule, et la détermination est établie en fonction d'une vitesse du véhicule.

4. Procédé de commande de gaz d'échappement pour un moteur à combustion interne (1), le moteur à combustion interne (1) comprenant une soupape d'addition (230) configurée pour ajouter un agent de réduction à un passage d'échappement (26), et un catalyseur de purification de NOx (41) configuré pour purifier du gaz d'échappement avec du NOx dedans grâce à l'agent de réduction ajouté, le procédé de commande de gaz d'échappement étant **caractérisé en ce qu'**il comporte le fait de :
réaliser une transition entre un état d'ouverture et un état de fermeture de la soupape d'addition (230) par commutation entre une excitation et un arrêt d'excitation de la soupape d'addition (230) ;
calculer une quantité de diminution d'une température du gaz d'échappement s'écoulant hors du catalyseur de purification de NOx (41) par rapport à une température du gaz d'échappement avant de s'écouler dans le catalyseur de purification de NOx (41), quand la soupape d'addition (230) est dans la transition vers l'état de fermeture ;
déterminer qu'une fuite d'agent de réduction de la soupape d'addition (230) s'est produite quand la quantité de diminution est supérieure ou égale à une valeur de détermination ; et
interdire une détermination de la fuite d'agent de réduction de la soupape d'addition (230) quand le catalyseur d'oxydation est activé.
